# FASCICULE DE BREVET EUROPEEN

(11) **EP 1 893 489 B1**
(45) Date de publication et mention de la délivrance du brevet: **30.09.2009**
(21) Numéro de dépôt: 06764782.6
(22) Date de dépôt: 13.06.2006
(51) Int. Cl.: B64G 1/64

(54) **STRUCTURE LEGERE DEPLOYABLE ET RIGIDIFIABLE APRES DEPLOIEMENT, SON PROCEDE DE REALISATION, ET SON APPLICATION A L'EQUIPEMENT D'UN VEHICULE SPATIAL**
ENTFALTBARE UND NACH DEM ENTFALTEN VERSTEIFBARE LEICHTBAUSTRUKTUR, VERFAHREN ZU DESSEN HERSTELLUNG UND VERWENDUNG IN EINEM RAUMFAHRZEUGS
DEPLOYABLE LIGHTWEIGHT STRUCTURE CAPABLE OF BEING RIGIDIFIED AFTER BEING DEPLOYED, METHOD FOR MAKING THE SAME, AND USE THEREOF FOR EQUIPPING A SPACECRAFT

(30) Priorité: 22.06.2005 FR 0506342
(43) Date de publication de la demande: 05.03.2008
(73) Titulaire: ASTRIUM SAS, 75016 Paris (FR)
(72) Inventeur: CHEYNET DE BEAUPRE, René, Jean, F-31320 Castanet Tolosan (FR)
(74) Mandataire: Cabinet Plasseraud
(86) Numéro de dépôt international: PCT/FR2006/001333
(87) Numéro de publication internationale: WO 2006/136675

(56) Documents cités:
- WO-A-20/04072413
- US-A- 5 579 609
- LEFEVRE Y.M., DI GESU F., EYMARD M., ROUMEAS R.: "Design Solutions for Inflatable Space Structures" IAC PAPER IAC-03-I.6.10, 2003, XP001207789 54th International Astronautical Congress of the International Astronautical Federation, 29 September - 3 October 2003

## Description

La présente invention se rapporte à une structure légère déployable et rigidifiable après déploiement, pouvant être très simple, mais également potentiellement complexe, ainsi que son procédé de réalisation, et, dans une application pour laquelle la structuré, selon l'invention présente un intérêt particulier pour le demandeur, son application à l'équipement de véhicules spatiaux, par exemple, et dé façon non limitative, pour la réalisation de bielles de rigidification maintenant des panneaux, solaires ou de radiateurs, en position déployée par rapport au corps du véhicule spatial, pour maintenir un composant, par exemple extérieur, dans une position donnée et avec un éloignement donné par rapport au corps du véhicule spatial, ou encore pour maintenir en extension une surface, par exemple plane, comme un écran solaire, ou complexe, comme un réflecteur d'antenne.

D'une manière générale, l'invention propose une technique de réalisation d'une structure légère déployable et rigidifiable après déploiement qui, après stockage sous un volume réduit, peut être déployée manuellement ou à l'aide de moyens de déploiement appropriés, à la suite de quoi la structure peut se rigidifier, les éventuels moyens de déploiement pouvant être retirés ou escamotés après leur intervention, comme un outil de montage ou une machine-outil de montage qui est ensuite démonté(e) et/ou déplacé(e).

La structure et le procédé selon l'invention peuvent être utilisés pour la réalisation de toute structure qui doit être transportée et/ou conservée dans un volume réduit, puis déployée et rigidifiée in situ.

Dans le domaine spatial, les véhicules spatiaux, tels que satellites artificiels et sondes d'exploration ou interplanétaires, ont des corps et des équipements de plus en plus complexes, nécessitant des structures à la fois légères, et de volume réduit, pour minimiser la masse et le volume au lancement du véhicule spatial, et stables pour maintenir des positionnements relatifs précis, en particulier d'instruments de mesure embarqués par rapport au corps du véhicule spatial.

Simultanément, l'invention propose une structure du type présenté ci-dessus et un procédé dé réalisation de cette structure qui sont d'un faible coût, au regard des matériaux et techniques prouvant être utilisés, et d'une grande facilité de mise en oeuvre.

Les structures légères déployables de l'état de la technique sont de trois types principaux.

Celles du premier type sont des structures mécaniques, constituées de pièces rigides articulées entre elles, ces structures pouvant également comporter des haubans. En général, les structures de ce type sont déployées par l'action de ressorts, mais elles peuvent aussi être déployées, étendues ou ouvertes par le gonflement d'au moins une vessie, les ressorts et vessies pouvant conserver leur énergie élastique ou leur pression de gonflage pour que les structures déployées conservent leur forme, comme connu dans US 5 990 851.

Les structures légères déployables du second type sont des structures souples, faisant appel à des pièces élastiques, et qui sont en général repliées sous contraintes et se déploient sans aide extérieure, dès la libération des contraintes, par exemple par l'ouverture d'un conteneur dans lequel elles sont stockées sous un faible volume, par exemple à l'état replié, enroulé ou effondré. Leur constitution peut être très simple, du type ruban qui se déroule d'un dévidoir, et dont une certaine longueur dévidée se maintient tendue de par la conformation du ruban et du matériau constitutif, par exemple du type mètre à ruban. Mais leur constitution peut être également plus complexe; et comporter par exemple un assemblage de membrures élastiques, comme connu par WO 03/06 2565.

Les structures légères déployables du troisième type sont des structures généralement gonflables, faisant appel à des vessies, comme connu par WO 02/09 79 17, et éventuellement recouvertes de matériaux durcissant après extension, comme connu par US 4,755,819 et WO 2004/07 24 13, ou comportant de tels matériaux durcissant après extension, comme connu de US 5,579,609 et US 6,735,920, lorsqu'une stabilité de forme à long terme est recherchée.

Les réalisations de l'état de la technique les plus proches de l'invention, à savoir les structures gonflables comportant des matériaux durcissant après extension ou recouverts de tels matériaux, présentent des inconvénients majeurs.

Après déploiement, ces structures ont des volumes qui restent des formes simples ou sont des assemblages de formes simples, tels que tubes et volumes assimilés à des sphères ou portions dé sphères.

De plus, la cohésion nécessaire entre la structure gonflable et le ou les éléments durcissants rend complexe la fabrication de l'ensemble. En particulier dans US 5, 579, 609, l'enveloppe de la structure gonflable reste solidaire de gaines des éléments durcissants, de sorte que le dispositif de déploiement à structure gonflable n'est pas indépendant de la structure légère déployable rigidifiable.

En outre, l'assemblage de l'ensemble est rendu encore plus complexe si au moins une contre-vessie est nécessaire pour procurer la forme finale à la structure déployée et emprisonner le matériau durcissant.

Par ailleurs, avec de telles structures connues, une séquence d'un gonflage, suivi d'un dégonflage et d'un repliement de la structure, si ces opérations sont possibles, peut remettre en cause les positions relatives des différents éléments de la structure ainsi que la cohésion de l'ensemble, ce qui est inacceptable pour de nombreuses applications.

Enfin, dans le cas d'utilisation de tissus durcissants pour procurer une stabilité de formes, la rigidité de l'ensemble de la structure après durcissement de tels tissus et dégonflage de la vessie nécessite l'emploi de renforts, en particulier pour éviter le flambage de la peau d'une telle structure, constituée des tissus durcis. En outre, avec une seule épaisseur de tissu, il n'est pas possible de réaliser des structures de grandes dimensions, lesquelles ne peuvent être réalisées qu'au moyen de structures déployables plus complexes.

Le problème à la base de l'invention est de remédier aux inconvénients précités des structures légères déployables du troisième type présenté ci-dessus, et l'invention a pour objet de proposer une structure légère déployable et rigidifiable après déploiement, qui satisfait mieux aux diverses exigences de la pratique que les réalisations connues présentés ci-dessus, en particulier en ce que l'invention permet la réalisation simple et économique de structures légères déployables aussi simples qu'une bielle de rigidification jusqu'aux structures aussi complexes qu'un treillis tridimensionnel pour la réalisation de poutres ou tours de support de charge.

A cet effet, la structure légère déployable et rigidifiable après déploiement selon l'invention se **caractérise en ce qu**'elle comprend un cordage, constitué d'au moins une corde souple, imprégnée d'un matériau durcissant, à durcissement contrôlable, destiné à rigidifier ladite au moins une corde après son déploiement et extension, et en ce qu'elle est indépendante de tout moyen de déploiement destiné à mettre en extension au moins une corde de la structure et à la maintenir tendue pendant le durcissement dudit matériau durcissant. Les termes « tout moyen de déploiement » concernent aussi bien un dépliement manuel qu'un dispositif de déploiement accessoire compris ou non dans la structure, mais dont cette dernière est indépendante en ce qu'au moins chaque corde de la structure est indépendante du ou des moyens de déploiement.

Ainsi, dans les cas les plus simples, la structure comprend un cordage qui peut être constitué d'une seule corde ou de plusieurs cordes reliées l'une à l'autre, soit directement, soit par l'intermédiaire d'au moins une pièce de liaison de ladite structure, alors que dans les cas de structures plus complexes, cette structure comprend avantageusement au moins un maillage en cordage, dont au moins une corde souple est imprégnée dudit matériau durcissant, et liée à elle-même et/ou à au moins une autre corde dudit cordage par au moins un lien.

Le maintien de la ou des cordes et/ou du ou des maillages en cordage à l'état déployé peut être assuré manuellement, pendant la rigidification, mais de préférence pour un grand nombre d'applications, dont les applications spatiales précitées, la structure comprend également et avantageusement au moins un dispositif de déploiement, indépendant du cordage et destiné à mettre en extension au moins une corde de la structure et la maintenir tendue pendant le durcissement dudit matériau durcissant.

Dans ce dernier cas, et lorsque la structure comprend au moins un maillage en cordage, le dispositif d'extension est destiné à déployer puis maintenir ledit maillage en cordage tendu pendant sa rigidification

Le cordage est avantageusement et facilement réalisable dans tous les matériaux fibreux connus, et en particulier le cordage est constitué d'au moins un type de fibres choisies parmi les fibres minérales, telles que de verre ou de carbone, synthétiques ou organiques, telles que de polyester, polyamide, et aramides, et artificielles.

De manière bien connue dans l'industrie aérospatiale, au moins une corde du cordage peut être une corde composite comprenant des stratifils de fibres pré imprégnés d'une résine rigidifiable.

De même, concernant la structure des cordes du cordage, l'une au moins des cordes peut être réalisée avec une structure bien connue, et notamment être de l'un des types suivants : corde tressée simple, corde toronnée, corde à âme entourée d'une gaine, à âme tressée, ou à fibres parallèles, ou à torons parallèles, et à gaine tressée ou toronnée.

Chaque corde du cordage peut ainsi être une corde disponible chez des fournisseurs ou être réalisée sur commande, sur une machine de cordage classique avec une fibre particulière ou une association de fibres particulières. L'imprégnation en matériau durcissant, en particulier une résine, peut n'être faite qu'ensuite, surtout si le cordage est du type tressé, ce qui autorise une ouverture des mailles pour une meilleure pénétration de la résine à coeur.

Avantageusement en outre, au moins une corde du cordage, mais de préférence chacune d'elle, est entourée d'un gainage étanche de l'un au moins des types suivants : gainage continu en matière synthétique, de préférence thermodurcissable, et gainage réalisé en feuille d'une matière synthétique enroulée autour de ladite corde puis collée ou soudée sur elle-même.

Un tel gainage peut être facilement réalisé, et permet l'utilisation de résines plus ou moins liquides, qui pourraient être séchées soit par la manipulation, soit par un séjour dans le vide spatial, ou plus généralement dans l'atmosphère ambiante.

Concernant le matériau durcissant, il réagit à l'un au moins des agents de durcissement sélectionnés dans le groupe comprenant les rayonnements lumineux, en lumière visible, ou ultraviolette, les rayonnements thermiques, la température, l'humidité, l'atmosphère ambiante, et le vide.

Dans une forme particulière de réalisation, au moins une corde du cordage comprend un élément chauffant, de préférence un filament chauffant, dont le chauffage commande le durcissement du matériau durcissant d'imprégnation de ladite corde.

Dans d'autres réalisations, au moins une corde du cordage, et de préférence chacune d'elle, comporte un gainage étanche, transparent à un agent de durcissement commandant le durcissement du matériau durcissant d'imprégnation de ladite corde, notamment un gainage étanche en une matière synthétique transparente au rayonnement ultraviolet.

L'étanchéité ainsi assurée vis-à-vis du milieu ambiant permet en outre d'augmenter la durée de péremption, qui pourrait se réduire à quelques mois pour une corde imprégnée de résine, non entourée d'un gainage étanche, et stockée à l'air libre, ou en atmosphère ambiante sans précaution particulière.

Concernant les attaches d'au moins une corde à elle-même ou à d'autres cordes du cordage, chaque lien peut être constitué par l'un au moins des moyens suivants : noeud, ligature, collier de serrage, pincement ou imbrication de deux portions de corde au niveau de leur liaison.

On notera que les pincements et imbrications de cordes au niveau de leurs liaisons ont pour effet avantageux de rigidifier la liaison après le durcissement de ces cordes.

De même, concernant la fixation d'une structure sur une base, ou encore la fixation d'objets sur une structure, d'une manière simple, au moins une corde du cordage, et de préférence chacune d'elles, peut être attachée à une extrémité par l'un au moins des moyens suivants : boucle, noeud et pincement.

Un autre avantage de la structure selon l'invention est qu'elle peut être optimisée par un choix approprié de la ou des cordes constituant le cordage. En effet, la section transversale d'au moins une corde dudit cordage peut être ajustée en forme et/ou dimension, en fonction des propriétés désirées pour la structure rigidifiée, notamment sa masse, son encombrement et sa raideur.

Avantageusement, la structure selon l'invention comprend de plus, une enveloppe de protection, entourant ledit cordage avant son déploiement, et déployée en même temps que ledit cordage, ladite enveloppe de protection étant indépendante du dispositif de déploiement, le cas échéant.

Avantageusement de plus, l'enveloppe de protection peut assurer l'une au moins des fonctions suivantes : contrôle thermique, protection anti-météorites, anti-débris et anti-radiations.

En outre, et pour le cas où l'agent de durcissement du matériau durcissant d'imprégnation de la ou des cordes du cordage est un rayonnement lumineux, l'enveloppe de protection est avantageusement transparente au moins à la plage du spectre du rayonnement solaire agissant comme agent de durcissement.

Concernant le dispositif de déploiement, il peut être de tout type approprié, et, en particulier, peut comprendre l'un au moins des moyens suivants : vessie gonflable, vérin, extenseur élastique, dispositif mécanique articulé, et hauban.

Avantageusement en outre, afin que le déploiement de la structure ne soit pas trop brutal et n'endommage donc pas cette dernière, la structure peut comprendre de plus un dispositif de freinage, destiné à limiter au moins la vitesse de déploiement pendant le déploiement.

Afin de protéger la structure avant son déploiement, à l'encontre de tout durcissement intempestif et contre toute agression mécanique éventuelle, l'ensemble du cordage, avant son déploiement, et, le cas échéant, du dispositif de déploiement, de l'enveloppe protectrice, du dispositif de freinage, et éventuellement également d'au moins un dispositif de commande et/ou production d'un agent de durcissement ainsi que d'au moins un dispositif de contrôle thermique, peut être logé dans un conteneur, dans lequel ledit cordage est disposé à l'état enroulé, plié ou effondré.

Dans ce cas, de préférence, le conteneur comporte au moins un couvercle, qui peut constituer un support érigé au dessus d'au moins un coffre de base du conteneur, lorsque la structure est déployée et rigidifiée.

La présente invention concerne également les applications de la structure selon l'invention, et telle que présentée ci-dessus, ces applications étant **caractérisées en ce que** cette structure est embarquée à bord d'un engin spatial.

A titre d'application pour laquelle l'invention semble présenter un intérêt particulier pour le demandeur ladite structure rigidifiée constitue au moins une bielle de rigidification d'un panneau mobile, solaire ou de radiateur, d'engin spatial, ladite structure comportant au moins une corde attachée par une extrémité au corps dudit engin spatial et par l'autre extrémité en un point fixe dudit panneau mobile, ledit point fixe étant choisi de sorte que les fréquences des modes de vibration dudit panneau maintenu déployé par rapport au corps de l'engin spatial, lorsque ladite corde est rigidifiée en bielle de rigidification, sont plus grande qu'un seuil de fréquence désiré, ledit panneau étant mobile par rapport au corps de l'engin spatial entre une position repliée, dans laquelle le panneau s'étend sensiblement le long du corps dudit engin spatial, et dans laquelle ladite corde est protégée de tout agent de durcissement susceptible de provoquer le durcissement dudit matériau durcissant d'imprégnation, et une position déployée, dans laquelle ledit panneau est écarté dudit corps de l'engin spatial par au moins un actionneur, et que la corde, après son déploiement par le déploiement dudit panneau , se rigidifie sous l'effet d'au moins un agent de durcissement, tel que le rayonnement solaire naturel, l'échauffement réalisé par un dispositif de chauffage dédié, interne ou externe à la corde ou un dispositif d'éclairage dédié, diffusant une lumière provoquant une rigidification du matériau durcissant, notamment une résine polymérisable réagissant à une lumière monochromatique.

La présente invention se rapporte aussi à un procédé de réalisation d'une structure légère déployable et rigidifiable après déploiement telle que présentée ci-dessus, le procédé se **caractérisant en ce qu**'il comprend au moins les étapes consistant à :
- imprégner au moins une corde d'un cordage de structure avec un matériau durcissant, dont le durcissement est contrôlable,
- réaliser une structure en cordage ayant la forme appropriée à donner la structure déployée et rigidifiée désirée, de préférence à l'aide d'un gabarit à la forme désirée, par le choix du nombre, des dimensions et formes et des positions relatives des cordes dudit cordage, le cas échéant du ou des maillages en cordage,
- mettre en extension ledit cordage à la forme désirée, avant son durcissement, et
- maintenir ledit cordage tendu pendant son durcissement, par exposition dudit cordage tendu à au moins un agent de durcissement dudit matériau durcissant d'imprégnation des cordes.

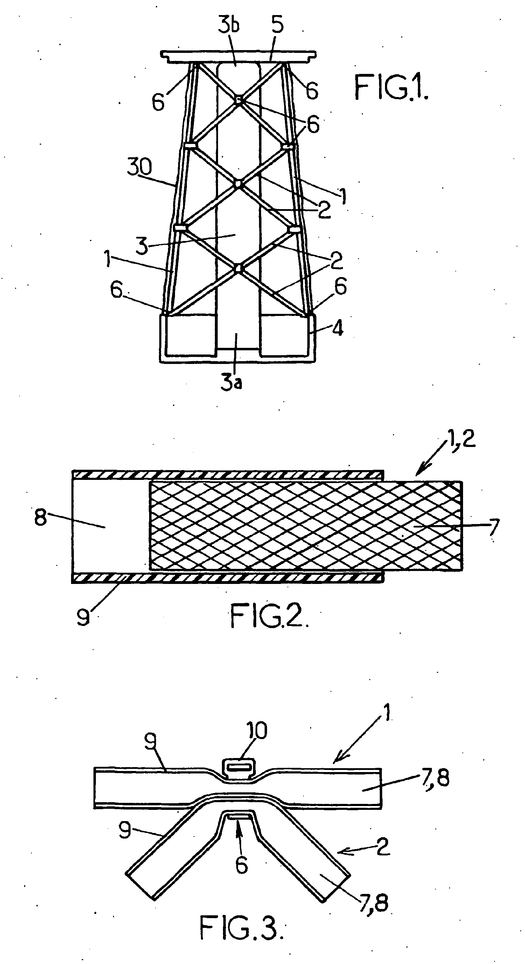

D'autres avantages et caractéristiques de l'invention découleront de la description donnée ci-dessous, à titre non limitatif, d'exemples de réalisation décrits en regard aux dessins annexés sur lesquels :
- la figure 1 est une vue en partie de face et en partie en coupe d'un premier exemple de structure selon l'invention, qui est une structure en treillis tridimensionnel, représentée déployée et érigée ;
- la figure 2 est une vue schématique, en partie en coupe et en partie en élévation latérale, d'un exemple de tronçon de corde imprégnée d'un matériau durcissant, utilisable pour constituer le cordage maillé de la structure de la figure 1,
- la figure 3 est une vue schématique en coupe d'un lien entre deux cordes, par exemple selon la figure 2, et appartenant par exemple au cordage maillé de la structure de la figure 1,
- la figure 4 est une vue en perspective d'un deuxième exemple de structure selon l'invention, agencée en tripode lorsqu'elle est déployée,
- la figure 5 est une vue partielle en perspective d'un troisième exemple de structure selon l'invention, constituant une poutre en treillis tridimensionnel de section transversale triangulaire lorsqu'elle est déployée et rigidifiée, constituée de cordes longitudinales ou de traverses inclinées et de couples ou cadres rigides,
- la figure 6 est un quatrième exemple de structure selon l'invention, constituant une tour ou potence en treillis tridimensionnel, avec une partie supérieure inclinée sur la verticale, lorsque la structure est déployée et rigidifiée,
- la figure 7 est un cinquième exemple de structure selon l'invention, qui assure le déploiement et l'extension d'un voile, par exemple réfléchissant, lorsque la structure est déployée et rigidifiée, et
- les figures 8a, 8b, et 8c représentent une séquence de déploiement d'un sixième exemple de structure selon l'invention, constituant une bielle rigidifiée de contreventement d'un panneau déployable de satellite, lorsque la structure est déployée et rigidifiée, avec un détail cerclé de la figure 8c représentant la fixation d'une extrémité de la bielle .
   Le premier exemple de structure légère déployée et rigidifiée selon la figure 1 est une tour en forme de tronc de pyramide de section transversale en quadrilatère rectangle, dont les montants érigés selon les arêtes aux quatre sommets de la section transversale, d'une part, et, d'autre part, les traverses inclinées qui se croisent et sont reliées aux montants sont tous constitués de cordes 1, 2 initialement souples et imprégnées d'un matériau durcissant, tel qu'une résine polymérisable, les cordes ayant été rigidifiées par un agent de durcissement de la résine d'imprégnation, après que la structure a été déployée dans la position représentée sur la figure 1 par un dispositif de déploiement essentiellement constitué, dans cet exemple, d'une vessie 3 souple, étanche et gonflable par un gaz, par exemple de l'air comprimé, la vessie 3 ayant, à l'état gonflé, la forme générale d'un cylindre allongé de section sensiblement circulaire, fixée par sa base 3a à une embase 4 supportant la structure et au travers de laquelle la vessie 3 peut être gonflée, ou, en variante, agencée en coffre, comme représenté schématiquement sur la figure 1, et contenant un réservoir de gaz (non représenté) pour le gonflement de la vessie 3, dont l'extrémité supérieure 3b prend appui contre une plate-forme 5, .supportée par la structure déployée et rigidifiée, et constituant, dans cet exemple, le couvercle du coffre ou caisson d'embase 4, dans lequel l'ensemble de la structure est logé à l'état replié, enroulé ou effondré du cordage maillé constitué par l'assemblage des cordes 1 des montants et des cordes 2 des traverses, avec également la vessie 3 dégonflée et repliée sur elle-même, et, le cas échéant, la bouteille de gaz de gonflage.

Les cordes de traverse 2 sont liées les unes aux autres à leurs points de croisement ainsi qu'aux cordes de montant 1, aux extrémités des traverses, par des liens 6, qui peuvent être réalisés de différentes manières, par des noeuds ou des ligatures ou encore par des pincements ou imbrications de deux portions adjacentes de deux cordes 1 et/ou 2, à l'aide d'un collier de serrage 10, comme décrit ci-dessous en référence à la figure 3.

De même, les extrémités inférieures des cordes de montant 1 comme des cordes de traverse 2 inférieures sont fixées au caisson d'embase 4 et les extrémités supérieures des cordes de montant 1 et des cordes de traverse 2 supérieures sont fixées à la plateforme 5 par d'autres liens 6, également constitués par des noeuds, des boucles ou par pincements, notamment.

L'ensemble des cordes de montant 1 et des cordes de traverse 2 constitue un cordage maillé, dont toutes les cordes sont initialement souples et imprégnées par exemple d'une résine polymérisable, à durcissement contrôlé, dont le durcissement, commandé après le déploiement de la structure par le gonflage de la vessie 3, provoque la rigidification de la structure à l'état déployé par rigidification des différentes cordes 1 et 2.

Pour assurer une excellente rigidification de la structure déployée, des cordes de traverse 2 sont avantageusement prévues dans chacune des quatre faces de la structure en tronc de pyramide lorsqu'elle est déployée.

Au moment et à l'endroit voulu, le treillis tridimensionnel de cette structure, conservé à l'état souple et replié dans le conteneur 4-5 fermé, de volume réduit par rapport à la structure déployée, est déployé et mis en tension par la vessie 3 progressivement gonflée, par exemple par une télécommande, après la libération, également télécommandée, du couvercle 5 vis-à-vis du coffre 4, cette vessie 3 constituant un dispositif de déploiement ou extenseur, à la suite de quoi le durcissement des cordes 1 et 2 intervient, par exposition à un agent de durcissement de la résine d'imprégnation des cordes, par exemple par l'action de l'atmosphère ambiante, de la chaleur, de l'humidité ou par la commande d'un dispositif annexe, générant l'agent de durcissement de la résine d'imprégnation des cordes 1 et 2.

Ce dispositif annexe peut être un dispositif d'éclairage en rayonnement ultraviolet, si la résine est sensible à ce rayonnement pour se polymériser et durcir, ou encore par un dispositif générant un rayonnement thermique, et éventuellement par le chauffage, par alimentation électrique, de filaments conducteurs mélangés aux fibres constituant les cordes 1 et 2.

La vessie gonflable 3, qui constitue le dispositif de déploiement ou d'extension de la structure, est indépendante du maillage en cordage 1-2 de la structure, et met en extension les cordes 1 et 2 et l'ensemble du maillage en cordage, et maintient ce maillage et les cordes qui le constituent à l'état tendu pendant le durcissement de la résine d'imprégnation.

La première étape de réalisation d'une telle structure est la réalisation du cordage, qui ne pose pas de problème particulier. En effet, les cordes 1 et 2 peuvent être réalisées à partir de toutes les fibres existantes, dont les plus fréquemment utilisées pour réaliser des stratifils pré imprégnés, couramment employés pour la constitution de matériaux composites notamment en aéronautique, sont des fibres minérales, telles que fibres de carbone ou de verre, des fibres organiques ou synthétiques, telles que fibres aramides, en polyamide ou en polyester, et également des fibres artificielles, réalisées à partir de fibres végétales, ou par association ou mélange de fibres de différentes natures. Du fait de son imprégnation par un matériau durcissant telle qu'une résine polymérisable, le cordage de la structure est un cordage composite, maintenu souple aussi longtemps que la résine d'imprégnation n'est pas polymérisée, puis durci et rigidifié, après déploiement du cordage et pendant son maintien déployé et tendu, par la polymérisation de la résine, déclenchée par exposition du cordage à un agent approprié de durcissement ou de polymérisation de la résine en fonction de la nature de cette résine.

Des structures en treillis tridimensionnels comprenant au moins un maillage de cordage, analogue à celui décrit ci-dessus, peuvent être réalisées en présentant de nombreuses formes différentes, la structure maillée étant initialement définie sur un gabarit précis à la forme voulue, par le choix du nombre, des dimensions, des formes de section et de la nature des différentes cordes utilisées dont on surveille la tension, ainsi que par la réalisation des liens des cordes entre elles, éventuellement de certaines cordes à elles-mêmes en différents points, et enfin à des éléments rigides éventuels de la structure, comme le conteneur et son couvercle, ou tout autre embase de support ou plate-forme de la structure.

L'intérêt d'une telle structure réside dans sa légèreté, simplicité, le faible coût des matériaux constitutifs ainsi que de la main d'oeuvre pour sa réalisation.

De préférence, l'installation du dispositif de déploiement telle que la vessie gonflable 3, ou éventuellement un vérin, voire un mécanisme articulé, par exemple un parallélogramme déformable, ou encore un extenseur élastique, voire des haubans, ou une combinaison de ces différents moyens, peut être effectuée après le contrôle dimensionnel de la structure en cordage, après son assemblage sur gabarit, pour autant qu'un dispositif de déploiement soit nécessaire, car le déploiement peut éventuellement être assuré manuellement.

Une fois déployée et rigidifiée, la structuré correspond à une charpente plus ou moins complexe, constituée de bielles ou poutres en matériau composite, et telle que le dispositif de déploiement peut, en cas de besoin, être retiré ou escamoté (par exemple dégonflé) après la rigidification de la structure déployée par durcissement de la résine d'imprégnation, du fait que cette structure peut être indépendante, totalement ou au moins au niveau des cordes 1 et 2, dudit dispositif de déploiement.

Ce durcissement peut être celui d'une résine réagissant au milieu ambiant, notamment le rayonnement ultraviolet d'origine solaire, la température ou l'humidité ambiante... Le durcissement peut aussi être commandé par l'adjonction d'une lampe à ultraviolets dans la structure, ou, commue déjà évoqué ci-dessus, par des filaments chauffants noyés dans chaque corde devant se rigidifier. L'adjonction d'un dispositif de génération de l'agent de durcissement de la résine est intéressante dans les cas où la structure, déployée et rigidifiée dans sa configuration finale d'utilisation, doit être au moins partiellement couverte d'une couverture opaque ou imperméable à l'agent de durcissement. Mais, dans toutes les réalisations d'une telle structure, il est essentiel que le démarrage du durcissement soit contrôlable, et adapté ou adaptable aux conditions ambiantes régnant sur le site de déploiement de chaque structure considérée.

La technique décrite ci-dessus pour la réalisation et la mise en oeuvre d'une structure légère déployable et rigidifiable après déploiement selon l'invention est également adaptable à des structures utilisées dans des systèmes de conditionnement, qui sont enroulées, pliés ou repliés, ou effondrés sur eux-mêmes, avant utilisation, et, éventuellement, après une première utilisation et avant une seconde utilisation, lorsque le phénomène de durcissement de la résine est réversible, par exemple lorsque la résine est du type thermoplastique.

En variante, la structure de la figure 1 décrite ci-dessus, comprend une enveloppe de protection 30, qui entoure le cordage durcissable 1-2 et la vessie 3 avant et après leur déploiement, cette enveloppe de protection 30 étant déployée en même temps que le cordage 1-2 et la vessie 3, et cette enveloppe 30, qui se présente comme une gaine de forme sensiblement cylindrique, mais pouvant être quelconque, est reliée par ses extrémités au caisson 4 et à la plate-forme ou couvercle 5, en étant indépendante du dispositif de déploiement constitué par la vessie gonflable 3 L'enveloppe 30 assure plusieurs fonctions, telles qu'un contrôle thermique, et/ou une protection contre des radiations, des météorites et/ou des débris se déplaçant dans l'espace. Cette enveloppe 30 est par exemple une isolation thermique multicouche du type dit MLI (Multi Layer Insulation)

Afin de ne pas gêner la rigidification du cordage 1-2 après son déploiement par la vessie 3, l'enveloppe 30 peut être réalisée de sorte qu' elle soit transparente à l'agent de durcissement auquel réagit la résine d'imprégnation des cordes 1 et 2, par exemple cette enveloppe 30 peut être transparente à la plage du spectre du rayonnement solaire qui agit comme agent de durcissement d'une résine d'imprégnation des cordes 1 et 2, notamment aux ultraviolets, de sorte que l'enveloppe 30 assure une certaine stabilité thermique du maillage 1-2 après déploiement.

Une structure selon l'invention présente de nombreux avantages, découlant de la simplicité et du faible coût de réalisation du matériau de base, à savoir la ou les cordes constitutives du cordage imprégné de résine. En fonction de l'application envisagée, et, en particulier du milieu dans lequel la structure est destinée à être déployée et rigidifiée ainsi que des efforts que la structure déployée et rigidifiée est destinée à supporter, la ou les cordes utilisées peuvent être choisies parmi les produits actuellement sur le marché et proposés par les corderies, ou au contraire être réalisées sur commande, sur une ou plusieurs machines de cordage classiques, en une fibre particulière ou en un assemblage particulier de fibres, les fibres de chaque corde étant regroupées, de manière connue, en filaments, stratifils, torons, lesquels sont agencés pour constituer une corde tressée simple, ou une corde toronnée, ou encore une corde comportant une âme entourée d'une gaine, l'âme pouvant être à fibres ou filaments parallèles, ou à torons parallèles, ou encore une âme tressée, tandis que la gaine peut être elle-même tressée, ou toronnée ou encore une gaine constituée d'une pellicule continue d'une matière synthétique, ou d'une feuille de matière synthétique enroulée autour de l'âme et collée ou soudée sur elle-même, de sorte que la gaine retienne la résine d'imprégnation de l'âme. Lorsque la gaine est elle-même tressée ou toronnée,les fibres et filaments constitutifs de la gaine sont avantageusement elles-mêmes ou eux-mêmes imprégnés d'une résine durcissante, par exemple par polymérisation, ou éventuellement thermoplastique, l'avantage des configurations tressées ou toronnées, au niveau de l'âme comme de la gaine de la corde, étant que ces configurations favorisent la pénétration de la résine dans la gaine comme dans l'âme de la corde, ce qui assure une rigidification plus homogène de la corde, et donc une meilleure aptitude de cette dernière,et de la structure ainsi constituée, à supporter les charges.

La figure 2 représente schématiquement, en partie en élévation latérale et en partie en coupe, une corde 1 ou 2 de la figure 1, dont l'âme 7 est tressée en filaments réalisés chacun par agglomération de fibres, d'une nature choisie en fonction de l'application, c'est-à-dire de la destination de la structure déployée et rigidifiée, les filaments de l'âme 7 étant imprégnés d'une résine durcissant, par exemple, lorsqu'elle est exposée à un rayonnement ultraviolet. L'âme 7 est enveloppée d'une gaine 8 continue, réalisée sous forme d'un film synthétique transparent au rayonnement ultraviolet, la corde constituée de l'âme 7 et de la gaine 8 étant enveloppée dans un gainage 9, réalisé en un matériau synthétique, également transparent au rayonnement ultraviolet, et éventuellement, thermo-rétractable pour bien enserrer la corde 7-8, et lui assurer une bonne protection mécanique.

Ce gainage 9 peut être facilement réalisé étanche, notamment pour permettre l'utilisation de résines plus ou moins liquides, qui pourraient être séchées soit par la manipulation, soit par un contact avec l'atmosphère ambiante, ou un séjour dans le vide, en cas d'application spatiale, et ce gainage 9 facilite en outre la manipulation de la corde ainsi réalisée. Il est important de noter que l'étanchéité assurée par le gainage 9 vis-à-vis du milieu ambiant permet d'augmenter la durée de péremption du cordage, c'est-à-dire la durée avant le terme de laquelle le cordage doit avoir été déployé et rigidifié, par durcissement de la résine d'imprégnation, faute de quoi le cordage n'est plus apte à se rigidifier du fait du vieillissement et de la détérioration de la résine, cette durée de péremption pouvant se réduire à quelques mois pour une résine imprégnant une corde maintenue en contact avec le milieu ambiant, par exemple à l'air libre, en l'absence de tout gainage tel que 9 de la figure 2.

En variante, ce gainage 9 peut également être réalisé en feuilles d'une matière synthétique enroulées autour de la corde puis soudées ou collées sur elles-mêmes à la place d'un gainage continu de matière synthétique.

Bien entendu, afin que le durcissement du matériau d'imprégnation puisse être commandé et contrôlé, en présence d'un tel gainage 9, il convient que ce gainage 9 soit transparent à l'agent de durcissement commandant le durcissement du matériau durcissant, tel que la résine, imprégnant la corde, sauf si l'agent de durcissement est produit par des éléments intégrés dans la corde, par exemple des filaments chauffants, comme mentionné ci-dessus.

La figure 3 représente schématiquement un lien 6 entre deux portions d'une même corde 1 ou 2, telle que représentée par exemple sur la figure 2, ou encore de deux cordes 1 ou 2 différentes, par exemple au niveau d'un lien 6 de liaison entre une corde de traverse 2 et une corde de montant 1 de la structure en treillis tridimensionnel de la figure 1.

Dans l'exemple de la figure 3, le lien 6, est réalisé à l'aide d'un collier de serrage 10, du type collier de serrage de fils électriques, qui entoure deux parties localement déformées et en contact, et imbriquées l'une dans l'autre, des deux cordes 1 et 2, sans destruction du gainage de protection 9 de chacune de ces cordes 1 et 2, autour desquelles le collier 10 réalise une ligature, au niveau d'un noeud du maillage en cordage du treillis de la figure 1. On note que le collier 10 peut être enlevé, ou déplacé en cours de réalisation de la structure. Ce procédé d'assemblage, très simple et réversible avant durcissement de la résine d'imprégnation des cordes 1 et 2, procure l'avantage que les déformations locales des cordes 1 et 2 au niveau de leurs imbrications assurent une liaison rigide après durcissement, par exemple par polymérisation, de la résine.

Si le lien 6 de la figure 3 constitue un noeud du maillage du treillis de la figure 1, on comprend que la corde 2 peut constituer, en succession, au moins deux traverses inclinées dont chacune est liée, à ses deux extrémités, à des cordes de montant 1 de la structure, sans qu'il soit nécessaire de découper des cordes à la longueur voulue pour constituer chacune des traverses de cette structure.

De même, la fixation de la structure obtenue sur une base, ou la fixation d'un objet, par exemple le couvercle 5 du conteneur 4, couvercle qui constitue la plateforme de la structure déployée et rigidifiée, sur la structure en cordage peut être réalisée par de simples pincements de cordes, éventuellement à leurs extrémités, par exemple entre une plaque et une embase vissées l'une vers l'autre, de sorte à retenir entre elles une partie de corde, pour constituer un lien agencé en noix de serrage. Pour faciliter la retenue d'une partie de corde, voir son extrémité, entre une plaque serrée contre une embase, il peut être indiqué de faire un noeud sur cette partie ou extrémité de la corde. En outre, pour attacher une extrémité de corde à un support; à un organe supporté, ou encore à une autre corde, il peut être avantageux d'utiliser une boucle, à la place d'un noeud ou d'un pincement, ou en plus de ces derniers.

Le procédé de l'invention, pour réaliser une structure légère, déployable et rigidifiable après déploiement, telle que présentée ci-dessus, et qui comprend, d'une manière générale, au moins les étapes consistant à imprégner une ou plusieurs cordes d'un cordage avec un matériau durcissant, dont le durcissement est contrôlable, tel qu'une résine polymérisable, à réaliser une structure en cordage ayant la forme appropriée pour obtenir la structure déployée et rigidifiée désirée, notamment à l'aide d'un gabarit à cette forme désirée, en choisissant le nombre, les formes, dimensions, notamment de la section transversale, des cordes, et de leurs positions relatives, notamment au sein d'un maillage en cordage, de sorte à ajuster l'encombrement, la raideur et la masse de la structure désirée, puis à mettre en extension le cordage à la forme désirée, avant son durcissement, et maintenir ce cordage tendu pendant son durcissement, par exposition du cordage tendu à au moins un agent de durcissement du matériau durcissant imprégnant les cordes, est un procédé qui peut être utilisé pour la réalisation de toute structure conservée, et éventuellement transportée, en occupant un volume réduit avant son utilisation, et donc son déploiement et sa rigidification. Il est donc clair que ce procédé peut être mis en oeuvre pour réaliser des objets usuels, auxquels leur forme et rigidité définitives sont données au moment où ces objets doivent être utilisés pour la première fois.

Dans le domaine spatial, ce procédé de réalisation de telles structures légères, déployables et rigidifiables après déploiement peut être principalement mis en oeuvre dans trois types d'applications : l'éloignement et le maintien en position d'objets par rapport à une embase de support, la rigidification d'une surface, et la rigidification de mécanismes déployables.

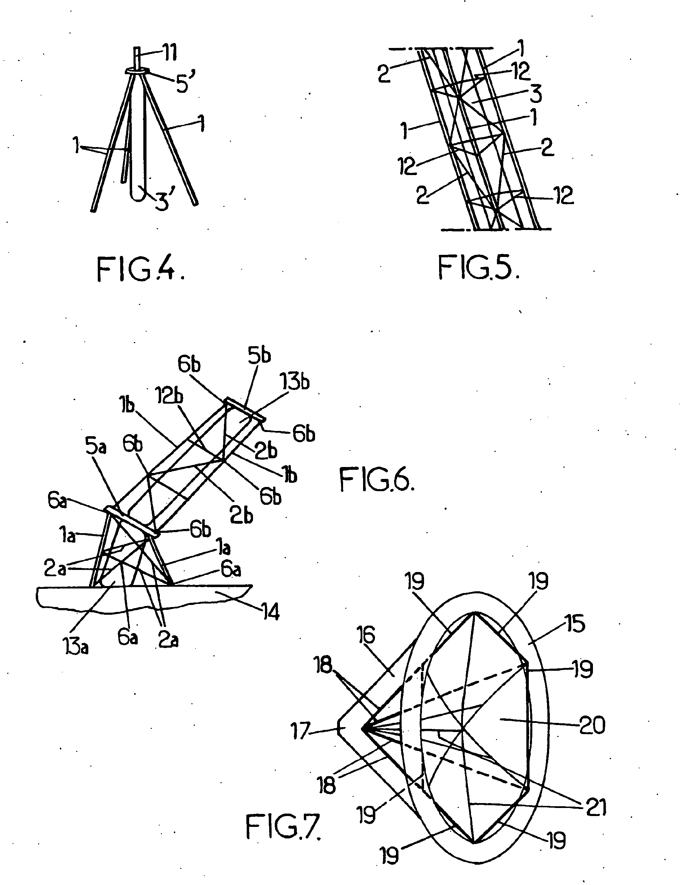

Concernant le premier type d'applications, trois exemples de réalisation sont schématiquement représentés sur les figures 4, 5 et 6.

La figure 4 représente, en position déployée, un tripode constitué de trois cordes de montant 1, de même longueur, fixées chacune par son extrémité inférieure au niveau de l'un respectivement des trois sommets d'un triangle équilatéral défini sur une embase porteuse (non représentée), et dont les extrémités supérieures sont fixées aux trois sommets d'un triangle sur la face inférieure d'un disque circulaire 5', constituant une plateforme,et surmontée d'une tige 11 pouvant supporter une charge utile, par exemple un détecteur ou dispositif optique ou un composant d'un système de télécommunication. Comme dans l'exemple de la figure 1, le déploiement de cette structure simple peut être assuré par le gonflement d'une vessie cylindrique sensiblement verticale 3' qui est indépendante des cordes 1 et qui, lorsqu'elle est gonflée, se dresse depuis l'embase de support, verticalement vers le haut, jusqu'à déployer et tendre les cordes 1 au maximum, et maintenir les cordes 1 tendues dans cette configuration pendant le durcissement de la résine d'imprégnation, par exposition à un agent de durcissement approprié à l'application, par exemple un rayonnement lumineux, ultraviolet, ou l'exposition à l'atmosphère ambiante, qui peut être le vide spatial.

La figure 5 représente en partie une poutre allongée, également constituée par un treillis tridimensionnel, mais, dans cet exemple, de section transversale de surface constante et de forme triangulaire, définie par trois cordes de montant 1, longitudinales, des cordes de traverse inclinées 2, raccordant deux cordes 1, comme dans l'exemple de la figure 1 et également des couples ou cadres 12 triangulaires, préalablement découpés dans un matériau rigide, donnant à l'ensemble sa section triangulaire, et raccordés par des liens tels que 6 de la figure 3 aux cordes 1, et éventuellement à des cordes 2, et à l'intérieur desquels un dispositif de déploiement constitué d'une vessie gonflable allongée 3 indépendante des cordes 1 et 2 s'étend, lorsqu'elle est gonflée pneumatiquement, pour commander le déploiement de la structure et ensuite la maintenir déployée pendant le durcissement de la résine d'imprégnation des cordes 1 et 2.

La figure 6 représente schématiquement une tour constituée par la superposition de deux étages, dont chacun est réalisé par un treillis tridimensionnel, l'étage supérieur étant incliné sur l'axe longitudinal de l'étage inférieur, pour, par exemple, à la fois écarter un composant, tel qu'une antenne, du corps d'un satellite, et d'autre part, positionner l'antenne en dehors du champ de vue d'un composant optique également monté sur le corps du satellite.

La structure de la figure 6 a son premier étage constitué d'une structure analogue à celle de la figure 1, mais dissymétrique, avec des cordes de montant la et certaines cordes de traverse inclinées 2a dont les extrémités inférieures sont directement fixées à des points fixes d'une embase 14, par exemple une face externe d'un corps de satellite, par des liens 6a analogues à ceux 6 mentionnés précédemment, les extrémités supérieures des cordes de montant la et de cordes de traverse inclinées 2a étant fixées par des liens 6a analogues à une plateforme intermédiaire 5a, lorsque la structure du premier étage est déployée par le gonflement d'une première vessie gonflable 13a, analogue à la vessie 3 de la figure 1, et en appui par ses extrémités longitudinales, d'une part, contre l'embase 14, et d'autre part, contre la face inférieure de la plateforme intermédiaire 5a, en étant indépendante de cette plate-forme 5a comme des cordes la et 2a.

Le deuxième étage de cette structure est sensiblement analogue à la structure de la figure 1, et constitué de cordes de montant 1b, dont les extrémités inférieures sont fixées par des liens 6b analogues aux liens 6 décrits précédemment, sur la face supérieure de la plateforme intermédiaire 5a, tandis que leurs extrémités supérieures sont fixées par des liens 6b à la face inférieure d'une plateforme supérieure 5b, les cordes de montant 1b étant entretoisées et contreventées par des cordes de traverse inclinées 2b, ainsi que par des cadres rigides prédécoupés (analogues aux cadres 12 de la figure 5) ou des cordes de traverse 12b s'étendant sensiblement dans des sections droites de ce deuxième étage de structure, c'est-à-dire perpendiculairement à son axe longitudinal, autour d'une deuxième vessie gonflable 13b, qui constitue le dispositif de déploiement du second étage de cette structure, et prend appui, par ses extrémités longitudinales, contre la face supérieure de la plateforme intermédiaire 5a et la face inférieure de la plateforme supérieure 5b, en étant indépendante de ces plates formes 5a et 5b comme des cordes 1b et 2b.

Le déploiement d'une telle structure à deux étages peut s'effectuer aussi bien en séquence, un étage après l'autre, que simultanément, ou avec chevauchement, le déploiement d'un étage commençant alors que celui de l'autre étage n'est pas encore terminé, puisque toutes les cordes des deux maillages en cordage utilisés pour les deux étages de la structure sont souples, et ne sont rigidifiées qu'après déploiement, alors que les deux vessies gonflées 13a et 13b maintienneht la structure déployée pendant la rigidification des cordes par durcissement de la ou des résines d'imprégnation.

La figure 7 représente un exemple d'une application du second type précité, à savoir la rigidification d'une surface, par exemple le maintien en extension d'une surface plane, utilisable comme écran solaire, ou d'une surface complexe comme un réflecteur d'antenne.

La structure comprend, comme dispositif de déploiement, d'une part, une vessie d'extension gonflable 15 de forme sensiblement torique, à l'extrémité des deux branches d'une deuxième vessie d'extension 16 gonflable, d'autre part, en forme de V, dont la base 17, destinée à être fixée sur un support (non représenté), sur lequel cette structure est destinée à se déployer, correspond au point de convergence de plusieurs cordes 18, s'étendant selon lés arêtes d'une pyramide à base polygonale, par exemple hexagonale, délimitée par d'autres cordes 19, entre lesquelles un voile réfléchissant 20 est fixé par ses bords. Des suspentes 21, constituées de longueurs de cordons non imprégnés d'un matériau durcissant, donnent au voile 20 sa forme particulière, déterminée par le nombre et la longueur des suspentes 21, ainsi que par le nombre et la longueur des cordes 18 et 19, qui sont imprégnées d'un matériau durcissant, par exemple une résine polymérisable, et qui constituent la structure rigidifiable de l'ensemble. Cette structure rigidifiable 18-19 détermine, après sa rigidification, la forme voulue de la pyramide à base polygonale permettant de déployer et d'étendre le voile 20, et l'on comprend que, dans l'application de ce voile 20 à la réalisation d'un réflecteur d'antenne, les suspentes de forme 21 permettent également d'ajuster la longueur focale du réflecteur ainsi réalisé. A cet effet, il est avantageux que des suspentes 21 relient chacun des sommets de la base polygonale définie par les cordes 19 à un point central, relié par une autre suspente 21 au point de convergence des cordes d'arêtes 18, c'est-à-dire à la base 17 de la vessie en V 16, au niveau de laquelle la structure durcissable est attachée à la structure de support par les extrémités des cordes 18, d'autres suspentes 21 pouvant relier le milieu, par exemple, de chaque suspente 21 "radiale" au point de convergence des cordes 18.

Afin que le déploiement du cordage 18-19 et des suspentes 21 par le gonflage des vessies 15 et 16 indépendantes du cordage 18-19 ne soit pas suffisamment rapide et brutal pour risquer de déchirer le voile 20 ou de détacher une partie de son contour des cordes 19 de bordure, un dispositif de freinage peut être associé au dispositif de déploiement. Par exemple, de petits ressorts (non représentés) peuvent être montés le long de certaines cordes 18 et 19, de sorte que ces ressorts soient chargés par le déploiement et l'extension des cordes 18 et 19 sous l'action du gonflement des vessies 15 et 16, et que cette chargé des ressorts assure un freinage du déploiement, limitant la vitesse de déploiement, et donc, en fin de cours, les efforts appliqués sur les points de liaison entre le voile 20 et les cordes de bordure 19.

Comme dans l'exemple de la figure 1, l'ensemble du cordage 18-19 de la figure 7, avant son déploiement, ainsi que les vessies 15 et 16 dégonflées, le voile 20, le dispositif de freinage le cas échéant, et éventuellement également un dispositif de production et/ou commande d'un agent de durcissement, par exemple une lampe à ultraviolet, peuvent être logés dans un conteneur fixé sur une face externe du corps du satellite, et dans lequel le cordage 18-19, le voile 20 et les suspentes 21 ainsi que les vessies 15 et 16 dégonflées sont logés à l'état enroulé ou replié sur eux-mêmes pour ceux de ces éléments qui sont souples ou déformables avant déploiement et rigidification.

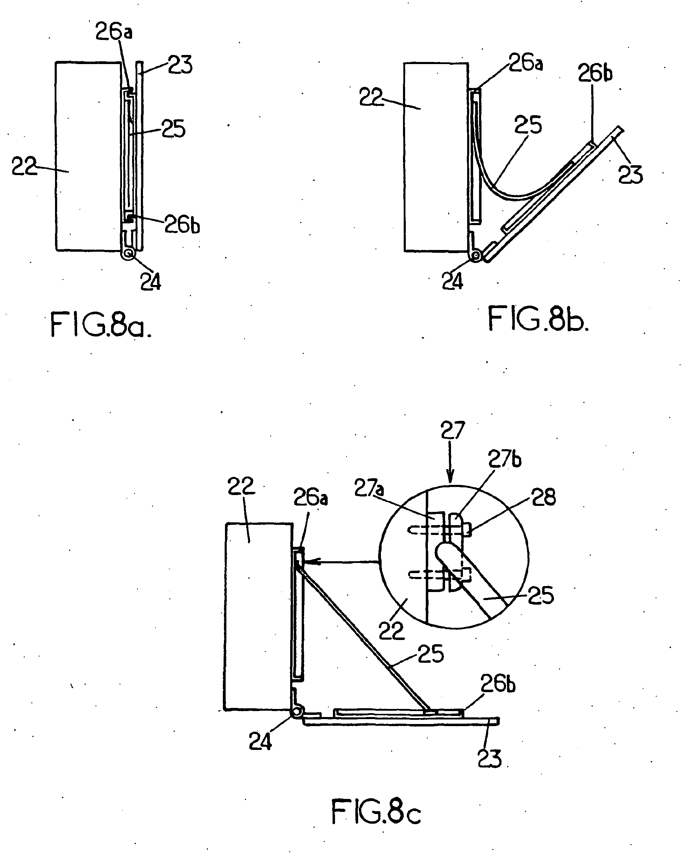

Les figures 8a à 8c représentent un exemple d'application du troisième type précité, dans lequel une unique corde imprégnée d'un matériau durcissant (résine polymérisable par exemple) limite le degré d'ouverture d'un panneau articulé sur un support, puis assure l'immobilisation du panneau par rapport au support après durcissement du matériau d'imprégnation de la corde, qui devient une.simple bielle rigide de longueur fixe.

Une telle bielle de rigidification peut être avantageusement utilisée sur des satellites, pour maintenir en position déployée des panneaux pivotants, tels que panneaux solaires ou panneaux de radiateurs.

En effet, certains satellites d'observation sont amenés à changer d'attitude rapidement pour pouvoir photographier différentes régions de la surface terrestre, de part et d'autre de leurs traces lors d'une même orbite. Plus le changement d'attitude de tels satellites, dits agiles, doit être rapide, et plus les différents appendices présentés par ces satellites doivent avoir une fréquence propre élevée, pour ne pas entrer en résonance et entraîner des oscillations du satellite.

Or, les panneaux solaires, dont ces satellites sont généralement équipés, présentent de grandes surfaces et sont des appendices critiques. Ils sont réalisés généralement en panneaux sandwiches, pour réduire leur masse, et sont articulés sur le corps du satellite, de sorte à être positionnés le long du corps du stellite, pour le lancement, afin de minimiser le volume occupé sous la coiffe du lanceur, lors de la mise en orbite. Une fois en orbite, ces panneaux sont déployés pour occuper leur position de service. Leur légèreté, dont découle une certaine souplesse, conduit à utiliser des bielles ou compas de renfort, entre le corps du satellite et l'extrémité des panneaux, et dont l'effet est d'augmenter la fréquence propre de ces panneaux.

L'utilisation d'une structure légère déployable et rigidifiable après déploiement selon l'invention, constituée, de manière simple, d'une unique corde rigidifiable, permet de simplifier la réalisation et le montage de telles bielles, à l'aide de moyens simples et économiques.

Sur la figure 8a, on a schématiquement représenté en 22 le corps d'un satellite, sur lequel un panneau 23, tel qu'un panneau solaire ou un radiateur, est monté pivotant par une charnière motrice 24, éventuellement freinée pour limiter la vitesse de pivotement, et s'étendant, par exemple, le long de bords parallèles et contigus du panneau 23 et du corps de satellite 22 (qui sont les bords inférieurs sur la figure 8a), et la figure 8b représente le panneau 23 en cours de pivotement, par et autour de la charnière motrice 24, vers sa position déployée, représentée sur la figure 8c, dans laquelle le panneau déployé 23 est sensiblement perpendiculaire à la position repliée qu'il occupait sur la figure 8a et est relié au corps 22 du satellite par une unique corde rigidifiable 25, imprégnée d'une résine polymérisable non encore polymérisée, et donc souple, qui ne s'oppose pas au pivotement du panneau 23, mais limite ce pivotement lorsque la corde 25 est tendue, comme représenté sur la figure 8c. Dans cette dernière position, la corde 25 est exposée à un agent de durcissement, par exemple le spectre ultraviolet du rayonnement solaire, de sorte que la résine d'imprégnation est polymérisée et que la corde 25 est rigidifiée en une belle de contre-ventement du panneau 23 déployé.

Pour assurer que la corde imprégnée 25 soit encore souple au moment du déploiement du panneau 23, cette corde 25 est fixée par ses deux extrémités, d'une part sur le corps 22, d'autre part, sur le panneau 23 au niveau de points fixes à l'intérieur d'un cadre de protection, respectivement 26a sur le corps du satellite 22 et 26b sur la face interne du panneau 23 (face tournée vers le corps 22 en position repliée du panneau 23), de sorte que ces deux cadres 26a et 26b se referment l'un sur l'autre en une boîte enveloppant totalement la corde imprégnée 25, à l'état souple, pour la mettre à l'abri de l'agent de durcissement, aussi longtemps que le déploiement par pivotement du panneau 23 par la charnière motrice 24 n'est pas commandé. En d'autres termes, les cadres 26a et 26b constituent une chicane de protection, interdisant l'exposition de la corde souple 25 repliée dans ces cadres aux rayons ultraviolets, en position repliée du panneau 23 contre le corps 22. Une fois déployée et exposée au rayonnement solaire, la corde 25 se rigidifie, ce qui a pour effet d'empêcher toute rotation au niveau de ses extrémités comme de sa partie centrale.

Avant rigidification, la fixation de la corde 25 à ses deux extrémités, en conservant une souplesse nécessaire pour faire office d'articulation en rotation à ces extrémités comme dans sa partie médiane, peut être réalisée comme représentée dans le détail agrandi et cerclé de la figure 8c, à l'aide d'une noix de serrage 27, comportant une embase 27a vissée contre le corps 22 du satellite et une plaque de serrage 27b, qui est serrée vers l'embase 27a grâce aux vis de montage et serrage 28, en enserrant une extrémité de la corde 25 dans des évidements ménagés en regard dans la plaque 27b et l'embase 27a, un noeud à l'extrémité dé la corde 25 pouvant éventuellement être retenu de l'autre côté de la noix de serrage 27, pour éviter toute libération intempestive de la corde 25.

Une fixation analogue peut être utilisée pour attacher l'autre extrémité de la corde 25 sur le anneau 23. Les points fixes d'attache des extrémités de la corde 25 sur le corps 22 et surtout sur le panneau déployable 23 sont choisis de sorte que les fréquences des modes de vibration du panneau 23 maintenu déployé par rapport au corps 22, lorsque la corde unique 25 est rigidifiée en bielle de rigidification, sont plus grandes qu'un seuil de fréquence désiré.

Dans cette réalisation, le dispositif de déploiement de la corde rigidifiable 25 est en fait le panneau déployable 23 lui-même, dont l'actionneur de déploiement est constitué par la charnière motrice 24.

L'agent de durcissement n'est pas limité au spectre ultraviolet de la lumière solaire, mais la corde rigidifiable 25 peut comporter, comme décrit dans les exemples précédents, des filaments chauffants pour assurer la rigidification par apport de chaleur, ou encore un dispositif générant l'agent de durcissement peut être embarqué dans le corps 22 du satellite et mis en fonctionnement après extension de la corde 25 pour provoquer le durcissement de cette dernière.

En variante, la charnière 24 peut ne pas être motrice, et le déploiement du panneau 23 peut être commandé par un ou plusieurs actionneurs indépendants de la charnière 24 comme de la corde 25, par exemple, par des moyens pyrotechniques associés à un ou plusieurs ressorts, par exemple de torsion, au niveau de la charnière 24 de liaison du panneau 23 au corps 22 du satellite.

Les exemples décrits ci-dessus montrent que la structure légère, déployable et rigidifiable après déploiement selon l'invention présente les principaux avantages suivants.

Toute forme de structure est facilement réalisable, notamment sur un gabarit, sans travail complexe du ou des matériaux utilisés, tel que découpes, coutures, etc...

La précision de la forme de la structure est imposée par l'élasticité des cordes et leur triangulation (maillage), indépendamment du dispositif de déploiement, et cette précision est vérifiable à l'aide d'un gabarit.

Les structures obtenues peuvent aller d'une simple bielle, comme dans l'exemple des figures 8a à 8c, à des treillis tridimensionnels extrêmement complexes (voir par exemple les figures 1, 5 et 6).

L'utilisation de toute résine durcissante, sensible à la lumière, aux rayons ultraviolets et/ou à des rayonnements thermiques en particulier, et de toutes les fibres est possible.

En plus du cordage imprégné et rigidifiable, la structure déployable peut comporter des éléments mécaniques, tels que plateforme, cadre, ou nacelle, pour assurer une fixation d'équipement ou une précision locale d'un positionnement.

Toute corde du cordage imprégné peut recevoir un gainage étanche, facilitant sa manipulation, la rendant insensible à certaines agressions externes, et augmentant sa durée de vie avant durcissement.

Le dispositif de déploiement ou extenseur est indépendant du cordage imprégné, et, éventuellement, intégrable dans la structure après la fabrication du cordage imprégné.

Dans le cas d'une extension de la structure par le gonflement d'au moins une vessie, cette dernière reste de structure simple, même pour une structure déployable complexe, et peut être facilement réalisée par des techniques actuelles ne nécessitant aucun développement.

Le dispositif de déploiement ou extenseur peut être facilement doublé, de sorte à assurer une certaine redondance, du fait de son indépendance par rapport au reste de la structure, et notamment le cordage imprégné. La rigidité de la structure rigidifiée après déploiement est ajustable par la quantité, les orientations et la ou les sections ainsi que la nature des fibres des cordes du cordage, éventuellement maillé, comme cela est le cas dans un maillage de charpente.

La modélisation mathématique de la structure est simplifiée, une fois que sont connues les caractéristiques des poutres et noeuds, dans le cas de structures en treillis.

Enfin, le déploiement, comme éventuellement le repliement de la structure, est simplifié et peut s'effectuer indépendamment sur la structure sans dispositif de déploiement, sur le ou les dispositifs de déploiement, ou sur les deux en même temps, en autorisant des essais au sol.

## Revendications

1. Structure légère déployable et rigidifiable après déploiement, comprenant un cordage (1-2, 1a-2a, 13-25-12b, 18-19, 25) constitué d'au moins une corde souple (1, 2, 1a, 1b, 2a, 2b, 18, 19, 25) imprégnée d'un matériau durcissant, à durcissement contrôlable, destiné à rigidifier ladite au moins une corde après son déploiement et extension, ladite structure étant indépendante de tout moyen de déploiement (3, 3', 13a-13b, 15-16), destiné à mettre en extension au moins une corde (1' 2, 1a, 1b, 2a, 2b, 12b; 18, 19) de la structure et à la maintenir tendue pendant le durcissement dudit matériau durcissant.

2. Structure selon la revendication 1, **caractérisée en ce qu'**elle comprend au moins un maillage (1-2, 1a-2a, 15-25-12b) en cordage, dont au moins une corde souple (1, 2, 1a, 1b, 2a, 2b, 12b) est imprégnée dudit matériau durcissant, et liée à elle-même et/ou à au moins une autre corde dudit cordage par au moins un lien (6, 6à, 6b).

3. Structure selon l'une quelconque des revendications 1 et 2, **caractérisée en ce qu'**elle comprend également au moins un dispositif de déploiement (3, 3', 13a-13b, 15-16), indépendant du cordage, et destiné à mettre en extension au moins une corde (1, 2, 1a, 1b, 2a, 2b, 12b, 18, 19) de la structure et à la maintenir tendue pendant le durcissement dudit matériau durcissant.

4. Structure selon la revendication 3 telle que rattachée à la revendication 2, **caractérisée en ce que** ledit dispositif de déploiement (3, 3', 13a, 13b, 15-16) est destiné à déployer puis maintenir ledit au moins un maillage (1-2, 1a-2a, 1b-2b-12b, 18-19) de cordage tendu pendant sa rigidification.

5. Structure selon l'une quelconque des revendications 1 à 4, **caractérisée en ce que** ledit cordage est constitué d'au moins un type de fibres choisies parmi les fibres minérales, telles que de verre ou de carbone, synthétiques ou organiques, telles que de polyester, polyamide, et aramides, et artificielles.

6. Structure selon la revendication 5,
**caractérisée en ce qu'**au moins une cordé dudit cordage est une corde composite comprenant des stratifils de fibres pré imprégnées d'une résine rigidifiable.

7. Structure selon l'une quelconque des revendications 1 à 5, **caractérisée en ce que** l'une au moins des cordes (1, 2) dudit cordage est de l'un des typés suivants : corde tressée simple, corde toronnée, corde à âme (7) entourée d'une gaine (9), à âme (7) tressée, ou à fibres parallèles, ou à torons parallèles, et/ou à gaine tressée ou toronnée.

8. Structure selon l'une quelconque des revendications 1 à 7, **caractérisé en ce qu'**au moins une corde (1, 2) dudit cordage est entourée d'un gainage étanche (9) de l'un au moins des types suivants : gainage continu en matière synthétique, de préférence thermodurcissable, et gainage réalisé en feuille d'une matière synthétique enroulée, autour de ladite corde (1, 2) puis collée ou soudée sur elle-même.

9. Structure selon l'une quelconque des revendications 1 à 8, **caractérisée en ce que** ledit matériau durcissant réagit à l'un au moins des agents de durcissement sélectionnés dans le groupe comprenant les rayonnements lumineux, en lumière visible, ou ultraviolette, les rayonnements thermiques, la température, l'humidité, l'atmosphère ambiante, et le vide.

10. Structure selon l'une quelconque des revendications 1 à 9, **caractérisée en ce qu'**au moins une corde (1, 2, 25) du cordage comprend un élément chauffant, de préférence un filament chauffant, dont le chauffage commande le durcissement du matériau durcissant d'imprégnation de ladite corde.

11. Structure selon la revendication 8,
**caractérisée en ce qu'**au moins une corde (1, 2) dudit cordage comporte un gainage étanche (9), transparent à un agent de durcissement commandant le durcissement du matériau durcissant d'imprégnation de ladite corde (1, 2), notamment un gainage étanche en une matière synthétique transparente au rayonnement ultraviolet.

12. Structure selon l'une quelconque des revendications 2 à 11, **caractérisée en ce que** ledit lien (6), par lequel au moins une corde (1, 2) dudit cordage est liée à elle-même ou à au moins une autre corde dudit cordage est constitué par l'un au moins des moyens suivants : noeud, ligature, collier de serrage (10), pincement ou imbrication de deux portions de corde (1, 2) au niveau de leur liaison.

13. Structure selon l'une quelconque des revendications 1 à 12, **caractérisée en ce qu'**au moins une corde (1, 2, 25) dudit cordage est attachée à une extrémité par l'un au moins des moyens suivants : boucle, noeud et pincement (27).

14. Structure selon l'une quelconque des revendications 1 à 13, **caractérisée en ce que** la section transversale d'au moins une corde (1, 2, 18, 19, 25) dudit cordage est ajustée en forme et/ou dimension, en fonction des propriétés désirées pour la structure rigidifiée, notamment sa masse, son encombrement et sa raideur.

15. Structure selon l'une quelconque des revendications 1 à 14, **caractérisée en ce qu'**elle comprend de plus une enveloppe (30) de protection, entourant ledit cordage (1-2) avant son déploiement, et déployée en même temps que ledit cordage, ladite enveloppe ( 30) de protection étant indépendante du dispositif de déploiement ( 3), le cas échéant.

16. Structure selon la revendication 15,
**caractérisé en ce que** ladite enveloppe ( 30) de protection assure l'une au moins des fonctions suivantes : contrôle thermique, protection anti-météorites, anti-débris et anti-radiations.

17. Structure selon l'une quelconque des revendications 15 à 16, **caractérisée en ce que** ladite enveloppe ( 30) de protection est transparente au moins à la plage du spectre du rayonnement solaire agissant comme agent de durcissement du matériau durcissant d'imprégnation d'au moins une corde ( 1,2) dudit cordage.

18. Structure selon l'une quelconque des revendications 1 à 17, **caractérisée en ce que** le dispositif de déploiement comprend l'un au moins des moyens suivants : vessie gonflable (3, 3', 13a, 13b, 15-16), vérin, extenseur élastique, dispositif mécanique articulé, et hauban.

19. Structure selon l'une quelconque des revendications 1 à 18, **caractérisée en ce qu'**elle comprend de plus un dispositif de freinage, destiné à limiter au moins la vitesse de déploiement pendant le déploiement.

20. Structure selon l'une quelconque des revendications 1 à 19, **caractérisée en ce que** l'ensemble du cordage (1-2), avant son déploiement, et, le cas échéant, le dispositif de déploiement (3), l'enveloppe protectrice (30), le dispositif de freinage, et éventuellement également au moins un dispositif de commande et/ou production d'un agent de durcissement ainsi qu'au moins un dispositif de contrôle thermique, est logé dans un conteneur (4-5), dans lequel ledit cordage est disposé à l'état enroulé, plié ou effondré.

21. Structure selon la revendication 20,
**caractérisée en ce que** ledit conteneur (4-5) comporte au moins un couvercle (5), constituant un support érigé au dessus d'au moins un coffre (4) de base dudit conteneur, lorsque ladite structure est déployée et rigidifiée.

22. Application de la structure selon l'une quelconque des revendications 1 à 21, **caractérisée en ce que** ladite structure (18-19-15-16-20-21, 25) est embarquée à bord d'un engin spatial (22).

23. Application selon la revendication 22,
**caractérisée en ce que** ladite structure rigidifiée constitue au moins une bielle (25) de rigidification d'un panneau mobile (23), solaire ou de radiateur, d'engin spatial, ladite structure comportant au moins une corde (25) attachée par une extrémité au corps (22) dudit engin spatial et par l'autre extrémité en un point fixe dudit panneau mobile (23), ledit point fige étant choisi de sorte que les fréquences des modes de vibration dudit panneau (23) maintenu déployé par rapport au corps (22) de l'engin spatial, lorsque ladite corde est rigidifiée en bielle de rigidification, sont plus grandes qu'un seuil de fréquence désiré, lendit panneau (23) étant mobile par rapport au corps (22) de l'engin spatial entre une position repliée, dans laquelle le panneau (23) s'étend sensiblement le long du corps (22) dudit engin spatial, et dans laquelle ladite corde (25) est protégée (26a, 26b) de tout agent de durcissement susceptible de provoquer le durcissement dudit matériau durcissant d'imprégnation, et une position déployée, dans laquelle ledit panneau (23) est écarté dudit corps (22) de l'engin spatial par au moins un actionneur (24), et que la corde (25), après son déploiement par le déploiement dudit panneau (23) , se rigidifie sous l'effet d'au moins un agent de durcissement, tel que le rayonnement solaire naturel, l'échauffement réalisé par un dispositif de chauffage dédié, interne ou externe à la corde (25) ou un dispositif d'éclairage dédié, diffusant une lumière provoquant une rigidification du matériau durcissant, notamment une résine polymérisable réagissant à une lumière monochromatique.

24. Procédé de réalisation d'une structure légère déployable et rigidifiable après déploiement selon l'une quelconque des revendications 1 à 21, **caractérisé en ce qu'**il comprend au moins les étapes consistant à :
- imprégner au moins une corde (1, 2, 1a, 1b, 2a, 2b, 12b, 18, 19, 25) d'un cordage de structure avec un matériau durcissant, dont le durcissement est contrôlable,
- réaliser une structure en cordage ayant la forme appropriée à donner la structure déployée et rigidifiée désirée, de préférence à l'aide d'un gabarit à la forme désirée, par le choix du nombre, des dimensions et formes des positions relatives des cordes dudit cordage, le cas échéant du ou des maillages (1-2, 1a-2a, 1b-2b-12b, 18-19) en cordage,
- mettre en extension ledit cordage à la forme désirée, avant son durcissement, et
- maintenir ledit cordage tendu pendant son durcissement, par exposition dudit cordage tendu à au moins un agent de durcissement dudit matériau durcissant d'imprégnation des cordes.

## Claims

1. A deployable light structure capable of being rigidified after deployment, comprising a rigging (1-2, 1a-2a, 13-25-12b, 18-19, 25) composed of at least one flexible rope (1, 2, 1a, 1b, 2a, 2b, 18, 19, 25) impregnated with a hardening material, whose hardening can be controlled, designed to rigidify said at least one rope after its deployment and extension, said structure being independent of any means of deployment (3, 3', 13a-13b, 15-16) designed to extend at least one rope (1, 2, 1a, 1b, 2a, 2b, 12b, 18, 19) of the structure and to keep it taut during hardening of said hardening material.

2. The structure as claimed in claim 1,
**characterized in that** it comprises at least one rigging mesh (1-2, 1a-2a, 15-25-12b), of which at least one flexible rope (1, 2, 1a, 1b, 2a, 2b, 12b) is impregnated with said hardening material and linked to itself and/or to at least one other rope of said rigging by at least one link (6, 6a, 6b).

3. The structure as claimed in any one of claims 1 and 2, **characterized in that** it also comprises at least one deployment device (3, 3', 13a-13b, 15-16) independent of the rigging and designed to extend at least one rope (1, 2, 1a, 1b, 2a, 2b, 12b, 18, 19) of the structure and to keep it taut during hardening of said hardening material.

4. The structure as claimed in claim 3, as related to claim 2, **characterized in that** said deployment device (3, 3', 13a, 13b, 15-16) is designed to deploy then keep said at least one rigging mesh (1-2, 1a-2a, 1b-2b-12b, 18-19) taut during its rigidification.

5. The structure as claimed in any one of claims 1 to 4, **characterized in that** said rigging is composed of at least one type of fiber selected from mineral, such as glass or carbon, and synthetic or organic, such as polyester or polyamide, and aramid and artificial fibers.

6. The structure as claimed in claim 5,
**characterized in that** at least one rope of said rigging is a composite rope comprising fiber rovings preimpregnated with a resin capable of being rigidified.

7. The structure as claimed in any one of claims 1 to 5, **characterized in that** at least one of the ropes (1, 2) of said rigging is of one of the following types: single braided or woven rope, laid rope, rope with a core (7) enclosed in a sheath (9), rope with a braided or woven core (7), rope with parallel fibers or strands and/or rope with a braided or woven or laid sheath.

8. The structure as claimed in any one of claims 1 to 7, **characterized in that** at least one rope (1, 2) of said rigging is enclosed in an impervious sheath (9) of at least one of the following types: a continuous sheath made of synthetic, preferably thermosetting, material and a sheath made of a sheet of synthetic material wrapped around said rope (1, 2), then glued or welded to itself.

9. The structure as claimed in any one of claims 1 to 8, **characterized in that** said hardening material reacts with at least one of hardening agents selected from the group comprising light radiation in visible or ultraviolet light, thermal radiation, temperature, humidity, ambient atmosphere and vacuum.

10. The structure as claimed in any one of claims 1 to 9, **characterized in that** at least one rope (1, 2, 25) of the rigging incorporates a heating element, preferably a heating filament, whose heating controls the hardening of the hardening material impregnating said rope.

11. The structure as claimed in claim 8,
**characterized in that** at least one rope (1, 2) of said rigging incorporates an impervious sheath (9) transparent to a hardening agent controlling the hardening of the hardening material impregnating said rope (1, 2), in particular, an impervious sheath made of synthetic material transparent to ultraviolet radiation.

12. The structure as claimed in any one of claims 2 to 11, **characterized in that** said link (6), by which at least one rope (1, 2) of said rigging is linked to itself or to at least one other rope of said rigging, is composed of at least one of the following means: a knot, a tie, a clamping collar (10), by gripping or binding of two sections of the rope (1, 2) at their linkage location.

13. The structure as claimed in any one of claims 1 to 12, **characterized in that** at least one rope (1, 2, 25) of said rigging is attached at one end by at least one of the following means: a loop, a knot and by gripping (27).

14. The structure as claimed in any one of claims 1 to 13, **characterized in that** the cross section of at least one rope (1, 2, 18, 19, 25) of said rigging is adjusted in shape and/or dimension according to the desired properties of the rigidified structure, in particular, its mass, its spatial requirement and its stiffness.

15. The structure as claimed in any one of claims 1 to 14, **characterized in that** it comprises additionally a protective jacket (30) enclosing said rigging (1-2) before its deployment and deployed simultaneously with said rigging, said protective jacket (30) being independent from the deployment device (3), if need be.

16. The structure as claimed in claim 15,
**characterized in that** said protective jacket (30) ensures at least one of the following functions: thermal control, anti-meteorite, anti-debris and anti-radiation protection.

17. The structure as claimed in any one of claims 15 and 16, **characterized in that** said protective jacket (30) is transparent at least to the spectral range of solar radiation acting as hardening agent for the hardening material impregnating at least one rope (1, 2) of said rigging.

18. The structure as claimed in any one of claims 1 to 17, **characterized in that** the deployment device comprises at least one of the following means: an inflatable gas bag (3, 3', 13a, 13b, 15-16), a pressure cylinder, an elastic expander, a hinged mechanical device and a stay.

19. The structure as claimed in any one of claims 1 to 18, **characterized in that** it incorporates additionally a braking system designed to limit at least the deployment speed during deployment.

20. The structure as claimed in any one of claims 1 to 19, **characterized in that** the whole of the rigging (1-2), before its deployment, and, if required, the deployment device (3), the protective jacket (30), the braking system, and possibly also at least one hardening agent control and/or production device as well as at least one thermal control device, are housed in a container (4-5), in which said rigging is arranged in the rolled, folded or collapsed state.

21. The structure as claimed in claim 20,
**characterized in that** said container (4-5) comprises at least one cover (5) forming a support erected above at least one base trunk (4) of said container, when said structure is deployed and rigidified.

22. An application of the structure as claimed in any one of claims 1 to 21, **characterized in that** said structure (18-19-15-16-20-21, 25) is installed aboard a spacecraft (22).

23. The application as claimed in claim 22,
**characterized in that** said rigidified structure forms at least one rigidifying connecting rod (25) of a moveable solar or radiator panel (23) of a spacecraft, said structure comprising at least one rope (25) attached at one end to the body (22) of said spacecraft and at the other end to a fixed point of said moveable panel (23), said fixed point being chosen such that the vibration mode frequencies of said panel (23), kept deployed with respect to the body (22) of the spacecraft, when said rope is rigidified to form a rigidifying connecting rod, are greater than a desired frequency threshold, said panel (23) being moveable with respect to the body (22) of the spacecraft between a folded back position, in which the panel (23) extends substantially along the body (22) of said spacecraft and in which said rope (25) is protected (26a, 26b) from any hardening agent likely to cause hardening of said impregnating hardening material, and a deployed position, in which said panel (23) is moved away from said body (22) of the spacecraft by at least one actuator (24), and that the rope (25), after its deployment through deployment of said panel (23),
rigidifies under the effect of at least one hardening agent, such as natural solar radiation, heating by a dedicated heating device internal or external to the rope (25) or a dedicated lighting device emitting light to cause rigidifying of the hardening material, particularly a polymerizable resin reactive to monochromatic light.

24. A process for producing a deployable light structure capable of being rigidified after deployment as claimed in any one of claims 1 to 21, **characterized in that** it comprises at least the steps consisting in:
- impregnating at least one rope (1, 2, 1a, 1b, 2a, 2b, 12b, 18, 19, 25) of a structural rigging with a hardening material, whose hardening can be controlled,
- creating a rigging structure of a shape suitable for providing the desired deployed and rigidified structure, preferably using a template of the desired shape, by choosing the number, the dimensions and the shapes of the relative positions of the ropes of said rigging, if necessary, of the rigging mesh or meshes (1-2, 1a-2a, 1b-2b-12b, 18-19),
- extending said rigging into the desired shape before its hardening, and
- keeping said rigging taut during its hardening by exposure of said taut rigging to at least one hardening agent for said hardening material impregnating the ropes.

## Patentansprüche

1. Entfaltbare und nach dem Entfalten versteifbare Leichtbaustruktur, umfassend eine Takelage (1-2, 1a-2a, 13-25-12b, 18-19, 25) aus mindestens einem flexiblen Seil (1, 2, 1a, 1b, 2a, 2b, 18, 19, 25), das mit einem härtenden Stoff mit steuerbarer Aushärtung imprägniert ist, der dazu bestimmt ist, das mindestens ein Seil (1, 2) zu versteifen, nachdem es entfaltet und ausgebreitet wurde, wobei die Struktur unabhängig von jeglichen Entfaltungsmitteln (3, 3', 13a-13b, 15-16) ist, die dazu bestimmt sind, mindestens ein Seil (1, 2, 1a, 1b, 2a, 2b, 12b, 18, 19) der Struktur auszubreiten und straff zu halten, während der härtende Stoff aushärtet.

2. Struktur nach Anspruch 1, **dadurch gekennzeichnet, dass** sie mindestens eine Seilvernetzung (1-2, 1a-2a, 15-25-12b) umfasst, wobei mindestens ein flexibles Seil (1, 2, 1a, 1b, 2a, 2b, 12b) der Seilvernetzung mit dem härtenden Stoff imprägniert und mittels mindestens einer Verbindung (6, 6a, 6b) mit sich selbst und/oder mit mindestens einem anderen Seil der Takelage verbunden ist.

3. Struktur nach irgendeinem der Ansprüche 1 und 2, **dadurch gekennzeichnet, dass** sie außerdem mindestens eine von der Takelage unabhängige Entfaltungseinrichtung (3, 3', 13a-13b, 15-16) umfasst, die dazu bestimmt ist, mindestens ein Seil (1, 2, 1a, 1b, 2a, 2b, 12b, 18, 19) der Struktur auszubreiten und straff zu halten, während der härtende Stoff aushärtet.

4. Struktur nach Anspruch 3 in Verbindung mit Anspruch 2, **dadurch gekennzeichnet, dass** die Entfaltungseinrichtung (3, 3', 13a-13b, 15-16) dazu bestimmt ist, die mindestens eine Seilvernetzung (1-2, 1a-2a, 1b-2b-12b, 18-19) zu entfalten und anschließend während deren Versteifung straff zu halten.

5. Struktur nach irgendeinem der vorhergehenden Ansprüche 1 bis 4, **dadurch gekennzeichnet, dass** die Takelage aus mindestens einer Art Faserstoff besteht, der unter den Mineralfasern gewählt wurde, wie Glasfasern oder Carbonfasern, synthetischen Fasern oder organischen Fasern, wie Polyester-Polyamid-Aramid und Kunstfasern.

6. Struktur nach Anspruch 5, **dadurch gekennzeichnet, dass** mindestens ein Seil der Takelage ein Verbundseil ist, umfassend mit einem versteifbaren Kunstharz imprägnierte Faserbeschichtungen.

7. Struktur nach irgendeinem der vorhergehenden Ansprüche 1 bis 5, **dadurch gekennzeichnet, dass** mindestens eines der Seile (1, 2) der Takelage nach einer der folgenden Arten ausgebildet ist: einfach geflochtenes Seil, verdrilltes Seil, Seil mit einer von einer Hülse (9) umgebenen Seele (7), mit einer geflochtenen Seele (7), oder mit parallel angeordneten Fasern, oder mit parallel angeordneten Strängen, und/oder mit einer geflochtenen oder verdrillten Hülse.

8. Struktur nach irgendeinem der vorhergehenden Ansprüche 1 bis 7, **dadurch gekennzeichnet, dass** mindestens eines der Seile (1, 2) der Takelage von einer wasserfesten Ummantelung (9) umgeben ist, die nach einer der folgenden Arten ausgebildet ist: durchgehende Kunststoffummantelung, vorzugsweise aus Duroplast, und als Folie ausgebildete Kunststoffummantelung, die um das Seil (1, 2) herumgewickelt und anschließend daran angeklebt oder angeschweißt wird.

9. Struktur nach irgendeinem der vorhergehenden Ansprüche 1 bis 8, **dadurch gekennzeichnet, dass** der härtende Stoff mit mindestens einem Härtemittel reagiert, das aus einer Gruppe umfassend optische Strahlung mit sichtbarem Licht oder Ultraviolettstrahlung, Wärmestrahlung, Temperatur, Feuchtigkeit, Umgebungs-atmosphäre, und Vakuum, gewählt wird.

10. Struktur nach irgendeinem der vorhergehenden Ansprüche 1 bis 9, **dadurch gekennzeichnet, dass** mindestens ein Seil (1, 2, 25) der Takelage ein Heizelement, vorzugsweise einen Heizfaden, umfasst, deren Heizung die Verhärtung des imprägnierenden härtenden Stoffes des Seils steuert.

11. Struktur nach Anspruch 8, **dadurch gekennzeichnet, dass** mindestens ein Seil (1, 2) der Takelage eine wasserfeste Ummantelung (9) umfasst, die für ein Verhärtungsmittel durchlässig ist, das die Verhärtung des imprägnierenden härtenden Stoffes des Seils (1, 2) steuert, insbesondere eine wasserfeste Kunststoffummantelung, die für Ultraviolett-strahlung durchlässig ist.

12. Struktur nach irgendeinem der vorhergehenden Ansprüche 2 bis 11, **dadurch gekennzeichnet, dass** die Verbindung (6), durch die mindestens ein Seil (1, 2) der Takelage mit sich selbst oder mindestens einem anderen Seil der Takelage verbunden ist, aus mindestens einem der folgenden Mitteln besteht: Knoten, Verbindungsstelle, Schelle (10), Klemmen oder Ineinandergreifen von zwei Seilabschnitten (1, 2) auf der Höhe dieser Verbindung.

13. Struktur nach irgendeinem der vorhergehenden Ansprüche 1 bis 12, **dadurch gekennzeichnet, dass** mindestens ein Seil (1, 2, 25) der Takelage mittels eines der folgenden Mitteln mit einem Ende verbunden ist: Schleife, Knoten und Klemmen (27).

14. Struktur nach irgendeinem der vorhergehenden Ansprüche 1 bis 13, **dadurch gekennzeichnet, dass** der Querschnitt des mindestens einen Seils (1, 2, 18, 19, 25) der Takelage entsprechend der vorherbestimmten Eigenschaften für die versteifte Struktur, insbesondere der Masse, der Größe und der Steifheit, in seiner Form und/oder in seiner Größe angepasst ist.

15. Struktur nach irgendeinem der vorhergehenden Ansprüche 1 bis 14, **dadurch gekennzeichnet, dass** die Struktur weiterhin eine Schutzhülle (30) umfasst, die die Takelage (1-2) vor dem Entfalten derselben umschließt, und die gleichzeitig mit der Takelage entfaltet wird, wobei die Schutzhülle (30) gegebenenfalls unabhängig von der Entfaltungseinrichtung (3) ist.

16. Struktur nach Anspruch 15, **dadurch gekennzeichnet, dass** die Schutzhülle (30) mindestens eine der folgenden Funktionen sicherstellt: Wärmesteuerung, Schutz gegen Meteorite, Fremdkörperschutz und Strahlenschutz.

17. Struktur nach irgendeinem der vorhergehenden Ansprüche 15 bis 16, **dadurch gekennzeichnet, dass** die Schutzhülle (30) mindestens für den Bereich des Spektrums der Sonnenstrahlung durchlässig ist, der als Härtemittel des härtenden Imprägnierstoffes des mindestens einen Seils (1, 2) der Takelage wirkt.

18. Struktur nach irgendeinem der vorhergehenden Ansprüche 1 bis 17, **dadurch gekennzeichnet, dass** die Entfaltungseinrichtung mindestens eines der folgenden Mitteln umfasst: aufblasbare Blase (3, 3', 13a, 13b, 15-16), Zylinder, elastischer Extender, artikulierte Maschineneinrichtung, und Abspannseil.

19. Struktur nach irgendeinem der vorhergehenden Ansprüche 1 bis 18, **dadurch gekennzeichnet, dass** die Struktur weiterhin eine Bremseinrichtung umfasst, die dazu bestimmt ist, mindestens die Geschwindigkeit des Entfaltens während des Entfaltens zu begrenzen.

20. Struktur nach irgendeinem der vorhergehenden Ansprüche 1 bis 19, **dadurch gekennzeichnet, dass** die Gesamtheit der Takelage (1-2) vor dem Entfalten derselben, und gegebenenfalls die Entfaltungseinrichtung (3), die Schutzhülle (30), die Bremseinrichtung, und eventuell auch mindestens eine Steuereinrichtung und/oder eine Einrichtung zur Bildung eines Härtemittels sowie mindestens eine Einrichtung zur Wärmesteuerung, in einem Behälter (4-5) untergebracht ist, in dem die Takelage in einem aufgewickelten, gebogenen oder eingeklappten Zustand angeordnet ist.

21. Struktur nach Anspruch 20, **dadurch gekennzeichnet, dass** der Behälter (4-5) mindestens eine Abdeckung (5) aufweist, die eine Stütze bildet, die über mindestens einem Kasten (4) auf dem Boden des Behälters errichtet ist, wenn die Struktur entfaltet und versteift wird.

22. Verwendung der Struktur nach irgendeinem der Ansprüche 1 bis 21, **dadurch gekennzeichnet, dass** die Struktur (18-19-15-16-20-21, 25) in einem Raumfahrzeug-gerät (22) eingebaut ist.

23. Verwendung nach Anspruch 22, **dadurch gekennzeichnet, dass** die versteifte Struktur mindestens ein versteifendes Gestänge (25) eines bewegbaren Solar- oder Strahlerpanels (23) eines Raumfahrzeuggeräts bildet, wobei die Struktur mindestens ein Seil (25) aufweist, die an einem Ende mit dem Körper (22) des Raumfahrzeuggeräts und an dem anderen Ende mit einer festgesetzten Stelle des bewegbaren Panels (23) verbunden ist, wobei die festgesetzte Stelle so gewählt wird, dass die Frequenzen der Schwingungsmodi des Panels (23), das im Verhältnis zu dem Körper (22) des Raumfahrzeugsgeräts entfaltet gehalten wird, wenn das Seil in dem versteifenden Gestänge versteift ist, größer als ein vorherbestimmtes Frequenz-grenzwert sind, wobei das Panel (23) im Verhältnis zu dem Körper (22) des Raumfahrzeugsgeräts bewegbar ist, und zwar zwischen einer gefalteten Position, bei der sich das Panel (23) etwa längs dem Körper (22) des Raumfahrzeugsgeräts erstreckt, und bei der das Seil (25) vor jedem Härtemittel geschützt (26a, 26b) ist, das dazu geeignet ist, das Verhärten des imprägnierten Härtestoffes herbeizuführen, und zwischen einer entfalteten Position, bei der das Panel (23) mittels mindestens einem Krafterzeuger (24) von dem Körper (22) des Raumfahrzeugsgeräts beabstandet ist, und dass sich das Seil (25) nach dem Entfalten durch das Entfalten des Panels (23) versteift, und zwar unter der Wirkung von mindestens einem Härtemittel umfassend die natürliche Sonnenstrahlung, die Erhitzung, die durch eine zugeordnete Heizeinrichtung auf der Innen- oder Außenseite des Seils (25) erzielt wird, oder eine zugeordnete Beleuchtungseinrichtung, die ein Licht ausstrahlt, die eine Versteifung des Härtestoffes, insbesondere eines polymerisierbaren Harzes, herbeiführt, wobei das Harz auf monochromatiches Licht reagiert.

24. Verfahren zur Herstellung einer entfaltbaren und nach dem Entfalten versteifbaren Leichtbaustruktur nach irgendeinem der Ansprüche 1 bis 21, **dadurch gekennzeichnet, dass** das Verfahren mindestens die Schritte umfasst, die darin bestehen:
- mindestens ein Seil (1, 2, 1a, 1b, 2a, 2b, 12b, 18, 19, 25) einer Takelage der Struktur mit einem Härtemittel zu imprägnieren, das steuerbar aushärtet,
- eine Takelagenstruktur herzustellen, die eine Form aufweist, die dazu geeignet ist, die vorherbestimmte entfaltete und versteifte Struktur zu erzielen, und zwar vorzugsweise mittels einer Geräteschablone mit der vorherbestimmten Form, durch die Wahl der Anzahl, der Größen und der Formen der relativen Positionen der Seile der Takelage, gegebenenfalls einer Seilvernetzung (1-2, 1a-2a, 1b-2b-12b, 18-19) oder einer Anzahl von Seilvernetzungen,
- die Takelage vor dem Härten in der vorherbestimmten Form auszubreiten, und
- die Takelage gespannt zu halten während des Aushärtens, indem die gespannte Takelage mindestens einem Härtemittel des imprägnierenden Härtestoffes der Seile ausgesetzt wird.
